Europäisches Patentamt

European Patent Office

Office européen des brevets

(11) Numéro de publication: **0 220 085**
**B1**

(12) **FASCICULE DE BREVET EUROPEEN**

(45) Date de publication du fascicule du brevet:
25.04.90

(51) Int. Cl.⁴: **A61C 13/30**

(21) Numéro de dépôt: 86401999.7

(22) Date de dépôt: **12.09.86**

(54) Ensemble constitué d'un foret et d'un tenon d'ancrage d'une prothèse dentaire destiné à être fixé dans la racine d'une dent.

(30) Priorité: **13.09.85 FR 8513622**

(43) Date de publication de la demande:
**29.04.87 Bulletin 87/18**

(45) Mention de la délivrance du brevet:
**25.04.90 Bulletin 90/17**

(84) Etats contractants désignés:
**AT BE CH DE FR GB IT LI NL SE**

(56) Documents cités:
**CH-A- 424 086**
**DE-A- 2 936 690**
**FR-E- 80 794**
**LU-A- 40 671**

(73) Titulaire: **Reynaud, Marc, 23, Avenue Plaine Fleurie,
F-38240 Meylan(FR)**

(72) Inventeur: **Reynaud, Marc, 23, Avenue Plaine Fleurie,
F-38240 Meylan(FR)**

(74) Mandataire: **Bruder, Michel, 10 rue de la Pépinière,
F-75008 Paris(FR)**

ACTORUM AG

## Description

La présente invention concerne un ensemble constitué d'un foret et d'un tenon d'ancrage d'une prothèse dentaire destiné à être fixé dans la racine d'une dent.

On connaît actuellement des tenons d'ancrage qui sont réalisés avec différentes formes à savoir cylindrique, cylyndroconique, conique ou encore conique à étage. Chacun de ces types de tenon a des avantages et des inconvénients.

Notamment le brevet FR-E-80 794 décrit un tenon d'ancrage constitué de deux parties cylindroconiques coaxiales de diamètres différents, la partie cylindroconique de plus petit diamètre étant elle-même prolongée par une partie extrême cylindrique. Un tel tenon est mis en place dans un trou percé au moyen d'un foret de profil identique à celui du tenon mais d'un diamètre un peu supérieur en tous les points de la longueur du tenon. Une fois mis en place dans le trou foré dans la racine d'une dent, la partie extrême cylindrique du tenon s'arrête à une certaine distance du fond du trou. Un tel tenon présente l'inconvénient qu'il "flotte" relativement dans son trou et qu'il tend à remonter de lui-même, lors de l'injection de silicone pour la prise d'empreinte, sous l'effet de la pression de ce silicone injecté au moyen d'une seringue. Pour assurer un maintien ferme du tenon dans son trou il est nécessaire de placer, dans des gorges annulaires transversales de ce tenon, des circlips assurant un rattrapage du jeu. On conçoit par conséquent qu'un tel tenon ait une structure relativement complexe et par conséquent qu'il soit relativement onéreux à fabriquer et par ailleurs il ne permet pas d'obtenir une épaisseur rigoureusement calibrée de la couche de ciment de scellement interposée entre chacune des parties cylindriques et la paroi du trou foré.

La présente invention vise à remédier à ces inconvénients en procurant un ensemble constitué d'un foret et d'un tenon d'ancrage de formes particulières permettant d'obtenir une excellente rétention du tenon scellé dans la racine d'une dent.

A cet effet cet ensemble constitué d'un foret et d'un tenon d'ancrage d'une prothèse dentaire destiné à être fixé dans la racine d'une dent, le foret ayant un diamètre légèrement supérieur à celui du tenon, en tous les points de sa longueur, ce tenon et ce foret ayant des profils de méridienne similaires et étant constitués chacun de deux parties cylindroconiques coaxiales respectivement de grand et petit diamètres, la partie cylindroconique de petit diamètre comprenant une partie cylindrique se raccordant à la petite base du tronc de cône de la partie cylindroconique de grand diamètre faisant saillie à l'extérieur de la racine de la dent, est caractérisé en ce que le tenon et le foret se terminent respectivement par leurs parties extrêmes tronconiques de petit diamètre, ces parties extrêmes tronconiques ayant un demi-angle du sommet de l'ordre de 6° pour assurer un coincement de la partie extrême tronconique, de petit diamètre, du tenon dans la partie extrême tronconique correspondante du trou foré et la partie extrême tronconique du tenon a une longueur inférieure à celle du foret.

Le tenon d'ancrage suivant l'invention offre l'avantage d'avoir une rétentivité considérablement augmentée grâce à la présence des deux parties cylindriques respectivement de grand et petit diamètres, et d'assurer une très bonne jonction avec la prothèse par la partie cylindrique de grand diamètre sortant de la racine. Par ailleurs ce tenon permet d'assurer un film de ciment de scellement, ayant une épaisseur optimale comprise entre 20 et 40 micromètres, le long des deux parties cylindriques alors qu'un tenon conique parfaitement en contact avec les parois de la cavité peut ne pas laisser cette épaisseur minimale de ciment. La partie extrême tronconique du tenon respecte la conicité de la partie terminale de la dent. L'étage séparant les deux parties cylindroconiques est situé dans la zone cervicale où l'anatomie de la dent le permet. Le passage à l'étage s'effectue au moyen d'un cône très ouvert sans fragiliser la dent.

On décrira ci-après, à titre d'exemple non limitatif, une forme d'exécution de la présente invention, en référence au dessin annexé sur lequel:

La figure 1 est une vue en élévation d'un ensemble d'un foret et d'un tenon d'ancrage suivant l'invention

La figure 2 est une vue en coupe axiale d'un tenon d'ancrage suivant l'invention engagé et scellé dans une racine d'une dent.

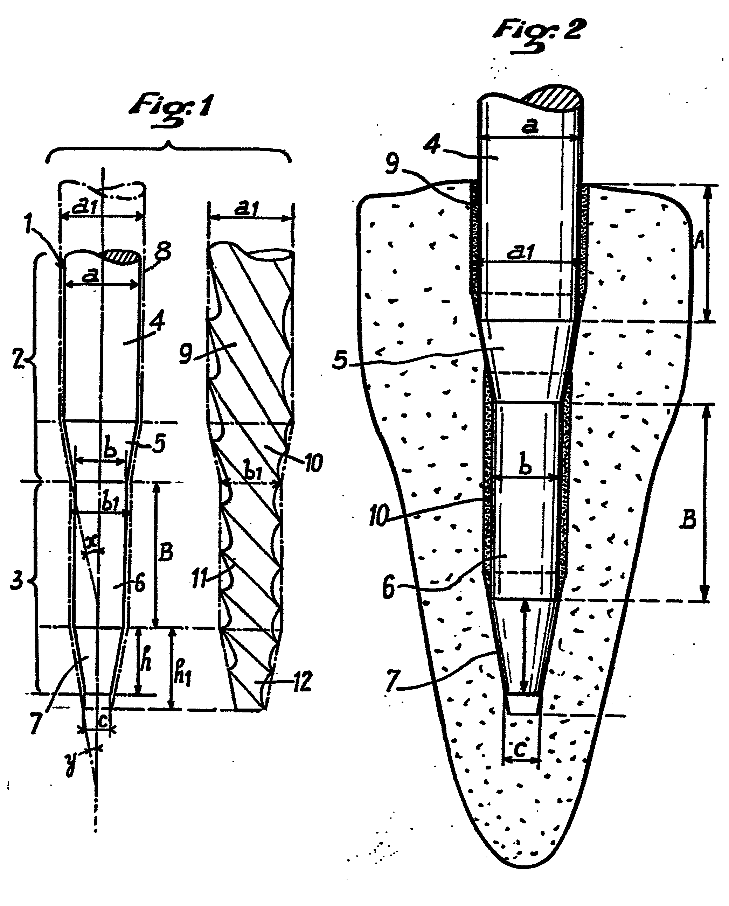

Le tenon d'ancrage 1 qui est représenté sur les figures 1 et 2, est destiné à être engagé et scellé dans une racine d'une dent, en vue de recevoir, sur sa partie supérieure externe, une prothèse.

Suivant l'invention le tenon d'ancrage 1 est constitué d'une seule pièce de révolution formée de deux parties cylindroconiques coaxiales et dans le prolongement l'une de l'autre à savoir une partie cylindroconique supérieure 2, de grand diamètre, et une partie cylindroconique inférieure 3 de plus petit diamètre. La partie cylindroconique 2 comprend une tige cylindrique 4, de diamètre relativement grand $\underline{a}$, prolongée, à son extrémité inférieure, par une partie tronconique 5 à petite base de diamètre $\underline{b}$. A cette petite base fait suite une tige cylindrique 6 de diamètre $\underline{b}$ laquelle se termine par une partie tronconique 7, convergeant vers le bas, et dont la petite base a un diamètre $\underline{c}$.

Les conicités des deux parties tronconiques 5 et 7 ont des valeurs différentes. Plus particulièrement la partie tronconique extrême 7 est plus pointue ( demi-angle au sommet y de 6° par exemple) que la partie tronconique intermédiaire 5 ( demi-angle au sommet x de 11 à 12° par exemple).

Le tenon d'ancrage 1 est engagé dans un trou creusé dans la racine d'une dent au moyen d'un foret 8 dont le profil de la méridienne est semblable à celui du tenon 1 mais dont le diamètre est supérieur à celui du tenon 1, en tous les points de sa longueur . Autrement dit le foret 8 comprend successivement, de haut en bas, une partie cylindrique supérieure 9 de grand diamètre $a_1$, une partie tronconique intermédiaire 10 de demi-angle au sommet $x$, une partie cylindrique inférieure 11 de petit diamètre $b_1$ et une partie extrême tronconique inférieure 12 de demi-angle au sommet $y$. Les grand diamètre $a_1$ et petit diamètre $b_1$ du foret 8 peuvent être supérieurs aux diamètres correspondants $a$ et $b$ du tenon d'ancrage 1 de 0,06 mm par exemple. Ceci est représenté dans la partie gauche de la figure 1 où le profil du foret 8 est représenté en trait mixte, superposé à celui du tenon 1. Les hauteurs des parties tronconiques intermédiaire 5,10 et des parties cylindriques de petit diamètre 6,11 sont respectivement les mêmes pour le tenon 1 et le foret 8 mais la partie extrême tronconique 12 du foret 8 a une hauteur $h1$ supérieure à la hauteur $h$ de la partie extrême tronconique 7 du tenon d'ancrage.

Lorsque le tenon d'ancrage 1 est engagé et scellé dans la racine d'une dent (figure 2), sa tige cylindrique supérieure 4 de grand diamètre $a$ permet d'assurer une rétention cylindrique, à l'intérieur de la racine 1, sur une distance A de l'ordre de 3mm. Le diamètre $a$ de cette tige 4 correspond au diamètre de jonction avec la prothèse et il se trouve être renforcé grâce à la prévision de l'étage entre les deux parties cylindroconiques 2 et 3.

Le tenon d'ancrage suivant l'invention permet d'assurer également une seconde rétention cylindrique sur la longueur $B$ correspondant à la longueur de la tige cylindrique 6 de la partie cylindroconique de petit diamètre.

Les parties tronconiques intermédiaire 5 et extrême 7, qui sont engagées étroitement dans les parties tronconiques, d'angles de conicité correspondants , creusées dans la racine assurent un centrage précis du tenon d'ancrage 1 par rapport au trou foré. Ce centrage précis permet de délimiter, autour des deux parties cylindriques 4 et 6 du tenon 1 des espaces de scellement annulaires 9 et 10, de largeur bien déterminée, remplis de ciment. Ainsi chaque film de ciment remplissant les espaces de scellement 9 et 10 se trouve avoir une épaisseur bien déterminée, égale à la moitié de la différence des diamètres $a_1$-$a$ ou $b_1$-$b$, soit de 0,03 mm dans l'exemple considéré. Par ailleurs la partie extrême tronconique très pointue, c'est-à-dire à faible angle au sommet $y$, assure un coincement particulièrement efficace du tenon 1 dans le trou foré, coincement s'opposant au dégagement du tenon hors du trou sous l'effet de la pression du matériau de prise d'empreinte (silicone) lors d'une prise d'empreinte, par injection du silicone sous pression au moyen d'une seringue.

Le tableau ci-dessous donne les valeurs des dimensions (en millimètres) de divers tenons qui ont été fabriqués et qui ont donné toute satisfaction au cours des essais qui ont été effectués:

| diamètre | $a$ | 1,5 | 1,8 | 2,1 | 2,3 |
|----------|-----|-----|-----|-----|-----|
| diamètre | $b$ | 1,1 | 1,2 | 1,4 | 1,5 |
| diamètre | $c$ | 0,6 | 0,6 | 0,6 | 0,7 |
| hauteur | h | 1,5 | 2 | 3 | 2 |
| longueur | B | 2,5 | 3,5 | 4 | 2,5 |

**Revendications**

1. Ensemble constitué d'un foret (8) et d'un tenon d'ancrage (1) d'une prothèse dentaire destiné à être fixé dans la racine d'une dent, le foret (8) ayant un diamètre légèrement supérieur à celui du tenon (1), en tous les points de sa longueur, ce tenon (1) et ce foret (8) ayant des profils de méridienne similaires et étant constitués chacun de deux parties cylindroconiques coaxiales (2, 3) respectivement de grand et petit diamètres (a, b; $a_1$, $b_1$), la partie cylindroconique (3) de petit diamètre (b) comprenant une partie cylindrique (6) se raccordant à la petite base du tronc de cône (5) de la partie cylindroconique (2) de grand diamètre (a) faisant saillie à l'extérieur de la racine de la dent, caractérisé en ce que le tenon (1) et le foret (8) se terminent respectivement par leurs parties extrêmes tronconiques (7, 12) de petit diamètre (b, $b_1$), ces parties extrêmes tronconiques (7, 12) ayant un demi-angle au sommet (y) de l'ordre de 6° pour assurer un coincement de la partie extrême tronconique (7), de petit diamètre, du tenon (1) dans la partie extrême tronconique correspondante du trou foré, et la partie extrême tronconique (7) du tenon (1) a une hauteur (h) inférieure à celle (h1) de la partie extrême correspondante (12) du foret (8).

2. Ensemble suivant la revendication 1 caractérisé en ce que les conicités des deux parties tronconiques (5, 7) du tenon (1) ont des valeurs différentes et la partie tronconique extrême (7) est plus pointue que la partie tronconique intermédiaire (5).

3. Ensemble suivant la revendication 2 caractérisé en ce que la partie tronconique intermédiaire (5) a un demi-angle au sommet (x) de l'ordre 11 à 12°.

**Claims**

1. Assembly constituted by a drill (8) and a tenon (1) for anchoring a dental prothesis adapted to be fixed in the root of a tooth, the drill (8) having a diameter slightly larger than that the tenon (1) at all points along its length, said tenon (1) and said drill (8) having similar meridian profiles and each being constituted by two coaxial cylindro-conical parts (2, 3) of large and small diameters (a, b; $a_1$, $b_1$) respectively, the cylindro-conical part (3) of small diameter (b) comprising a cylindrical part (6) connected to the small base of the conical frustum (5) of the cylindro-conical part (2) of large diameter (a) projecting out of the root of the tooth, characterized in that the tenon (1) and the drill (8) terminate respectively in their truncated end parts (7, 12) of small diameter (b, $b_1$), these truncated end parts (7, 12) having a semi-vertex angle (y) of the order of 6° so as to ensure a wedging of the truncated end part (7), of small diameter, of the tenon (1) in the corresponding truncated end part of the drilled hole and the truncated end part (7) of the tenon (1) has a height (h) lower than that ($h_1$) of the corresponding end part (1) of the drill (8).

2. Assembly according to claim 1, characterized in that the tapers of the two truncated parts (5, 7) of the tenon (1) have different values and the end truncated part (7) is shaper than the intermediate truncated part (5).

3. Assembly according to claim 2, characterized in that the intermediate truncated part (5) has a semi-vertex angle (x) of the order of 11 to 12°.

**Patentansprüche**

1. Kombination bestehend aus einem Bohrer (8) und einem Verankerungsstift (1) für eine in die Zahnwurzel einsetzbare Zahnprothese, bei der der Bohrer (8) einen geringfügig größeren Durchmesser aufweist als der Verankerungsstift (1) an allen Punkten seiner Länge, wobei die Längsschnittprofile von Verankerungsstift (1) und Bohrer (8) einander ähnlich sind und jeweils aus zwei aus einem zylindrischen und einem konischen Bereich zusammengesetzten, koaxialen Abschnitten (2, 3) mit großen bzw. kleinen Durchmessern (a, b; $a_1$, $b_1$) gebildet sind, wobei der zylindrisch-konische Abschnitt (3) mit kleinem Durchmesser (b) einen zylindrischen Bereich (6) umfaßt, der sich bündig an die kleine Basis des Kegelstumpfes (5) des zylindrisch-konischen Abschnitts (2) mit großem Durchmesser (a) anschließt, der über die Außenseite der Zahnwurzel vorspringt, dadurch gekennzeichnet, daß der Verankerungsstift (1) und der Bohrer (8) mit ihren kegelstumpfförmigen äußeren Bereichen (7, 12) mit kleinem Durchmesser (b, $b_1$) enden, wobei diese äußeren kegelstumpfförmigen Bereiche (7, 12) einen halben Spitzenwinkel (y) in der Größenordnung von 6° aufweisen, um ein Verkeilen des äußeren kegelstumpfförmigen Bereichs (7) des Verankerungsstifts (1) mit kleinem Durchmesser in dem entsprechenden, äußeren kegelstumpfförmigen Bereich des gebohrten Loches sicherzustellen, und daß der äußere kegelstumpfförmige Bereich (7) des Verankerungsstiftes (1) eine Höhe (h) aufweist, die geringer ist als die Höhe ($h_1$) des entsprechenden äußeren Bereichs (12) des Bohrers (8).

2. Kombination nach Anspruch 1, dadurch gekennzeichnet, daß die Konuswinkel der beiden kegelstumpfförmigen Bereiche (5, 7) des Verankerungsstiftes (1) verschiedene Werte aufweisen und der äußere kegelstumpfförmige Bereich (7) spitzer ist als der eingeschlossene kegelstumpfförmige Bereich (5).

3. Kombination nach Anspruch 2, dadurch gekennzeichnet, daß der eingeschlossene kegelstumpfförmige Bereich (5) einen halben Spitzenwinkel (x) in der Größenordnung von 11 bis 12° aufweist.

*Fig. 1*

*Fig. 2*